# EUROPEAN PATENT SPECIFICATION

(11) **EP 1 026 084 B1**
(45) Date of publication and mention of the grant of the patent: **21.05.2003**
(21) Application number: 00200351.5
(22) Date of filing: 02.02.2000
(51) Int. Cl.: B65C 9/00, B65C 9/46, G06K 1/12, G06K 9/18

(54) **Coding for a packaging, and method and device for applying it**
Koierung einer Verpackung und Verfahren und Vorrichtung zur Verwendung
Codage pour un emballage, et méthode et dispositif pour l'application

(30) Priority: 02.02.1999 NL 1011197
(43) Date of publication of application: 09.08.2000
(73) Proprietor: Technische Combinatie Nederland ( T.C.N.) B.V., 3069 XM Rotterdam (NL)
(72) Inventor: Geyer, Karl Walter, 3069 XM Rotterdam (NL)
(74) Representative: van Westenbrugge, André

(56) References cited:
- EP-A- 0 706 146
- EP-A- 0 721 891
- PATENT ABSTRACTS OF JAPAN vol. 016, no. 365 (P-1397), 6 August 1992 (1992-08-06) & JP 04 112390 A (FUJI ELECTRIC CO LTD), 14 April 1992 (1992-04-14)
- PATENT ABSTRACTS OF JAPAN vol. 007, no. 176 (P-214), 4 August 1983 (1983-08-04) & JP 58 082164 A (TOKYO SHIBAURA DENKI KK), 17 May 1983 (1983-05-17)
- PATENT ABSTRACTS OF JAPAN vol. 017, no. 482 (C-1105), 2 September 1993 (1993-09-02) & JP 05 123237 A (MATSUSHITA ELECTRIC IND CO LTD), 21 May 1993 (1993-05-21)

## Description

Subject invention relates to a coding for a packaging. A coding of this nature, for example a bar code, is generally used by manufacturers so that subsequently, for example at the point of sale, data concerning their products can be read. The production date or sale price, for example, can be determined on the basis of this data.

However, under certain conditions it may be desirable for additional coding to be applied at a later stage by parties other than the manufacturer. In such a case, it is essential that the information on a packaging of this nature should not be covered. Moreover, in the event of coding being applied at a later stage, it is imperative that this can be carried out easily.

If, for example, the case of a can packaging for drinks and the like is considered, it is undesirable for further coding to be applied to the top side, for hygiene reasons and because it makes it difficult to open the can. It is also undesirable for coding to be applied to the cylindrical wall of the packaging, since this makes it difficult to see information which is present on the can.

The prior art reveals a coding system using a paint stamp on the bottom side of a can packaging. Although it is easy to apply a paint stamp of this nature to the concave bottom side, it has proven difficult and expensive to read a code incorporated therein.

The object of the present invention is to provide a coding on a packaging which can be applied in a particularly simple manner and can be read electronically in a relatively inexpensive manner.

In a coding which is to be applied to the concave bottom side of a packaging as described above, this object is realised in that this coding comprises an annular label provided with an internal opening and a cutout which extends from said opening across the entire width of the label. This label may comprise any coding which is known in the prior art, such as a bar code. It has been found that such a label can be applied so that it bears flat against the concave shape of the packaging. Slight variations in the shape of the said concavity and slight variations in the position of the coding can particularly easily be tolerated by the form described above.

If the coding used is a bar code, it is preferable for this code to be designed as a number of concentric rings which are arranged on the annular label. This makes the code particularly easy to read. In this case, these continuous rings may be interrupted a number of times without causing problems for a simple bar code reader. In most standard bar code readers, there may be at least three interruptions, one interruption being the cutout described above while the other two interruptions may comprise further information or advertising.

A system of this nature can be used in a deposit system for cold drinks and beer cans, for example. A packaging of this nature has numerous advantages as a packaging material, but the most significant drawback is that they become worthless waste products after the contents have been consumed. When introduced into a waste management flow, such cans can easily be separated and the excess cost is limited. However, in practice it has been found that these cans often do not reach waste management flows and are thrown away randomly.

In the case of glass packaging, the introduction of a deposit or the like has lead to virtually 100% being returned. In the Netherlands, there are national organizations dealing with such matters.

However, for cans there are no such organizations, so that it is necessary to attempt to promote the return of empty cans at a local level under certain conditions. This applies, for example, to schools and the like, where users are less motivated to return waste in the appropriate containers. By levying a deposit on the cans at such schools, hospitals, etc., it is possible to achieve a high level of returns. In this context it is, of course, important that only cans which emanate from such schools or hospitals can be returned for the repayment of the deposit. It is undesirable for packaging derived from other areas to be used to collect a deposit. For this purpose, it is necessary for coding to be applied, and the coding described above is particularly suitable, since the coding described above can be applied by the end supplier, for example when the cans are being removed from the outer packaging and placed in a dispensing machine, display cabinet or refrigerator. This is made even easier if the codes are applied as stickers. These stickers may be arranged removably on a label and can be applied to the bottom side of the can using a suitable device. In this case, it is possible for such a label to have been at least partially formed into the shape of the concavity of the packaging against which such a sticker is to be placed when the label is removed from the substrate on which it is arranged.

The present proposal makes it possible to achieve a coding which is unique to a point of sale. Also, since the bottom side of packagings is not generally used for information, on the one hand it is clearly visible to the consumer and on the other hand it does not cover any advertising or the like, and the appearance of cans, bottles and the like is not impaired. By suitably selecting the material of the sticker, it is possible to provide a good resistance to moisture and low temperatures, while the sticker can be applied inexpensively. Bar code systems are reliable and can be procured comparatively cheaply, so that a deposit system can be implemented in a particularly simple manner.

The invention also relates to a device for applying such labels. This device comprises a handy appliance provided with a stock reel. This stock reel contains a substrate material on which a series of stickers is arranged. A web of material of this nature is moved past a stamper where, on the one hand, the sticker is separated from the substrate, the sticker is placed on the stamper and is at least partially given the final shape which this sticker adopts against the concave wall of the corresponding packaging. Then, the sticker is pressed against the packaging by means of the stamper.

However, it will be understood that numerous other devices are conceivable for applying a label as described above to the concave bottom side of a packaging, such as a can.

The invention will be explained in more detail below with reference to an exemplary embodiment which is illustrated in the drawing, in which:
Fig. 1 shows a diagrammatic side view of a can packaging and a label according to the invention which is to be applied thereto;
Fig. 2 shows the device for applying a label to the bottom side of a packaging, in a first position; and
Fig. 3 shows the device from Fig. 2 in a second position.

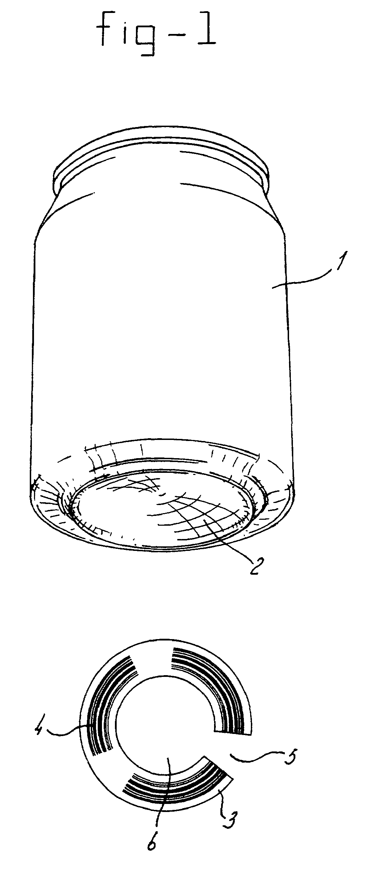

In Fig. 1, a can packaging for cold drinks is denoted overall by 1. It is provided, in the usual way, with a flanged-on lid with removable closure, has a cylindrical side wall and a concave base wall 2. The object of the present invention is for a coding to be applied to this concave base wall 2. This coding is in the form of a label 3 which comprises an annular piece of paper or plastics material. In its interior, there is an opening 6 which opens out into a cutout 5. By folding this label 3 out of its flat shape, it is possible to obtain a more or less conical shape corresponding to the shape of the concave base wall 2. Concentric circles 4, which function as a bar code, are arranged on this sticker. If appropriate, there may be information carriers which interrupt the bar code rings. The unprinted side is provided with a layer of adhesive, by means of which the sticker is in the first instance stuck to the substrate material, but by means of which ultimately the sticker is attached to the packaging.

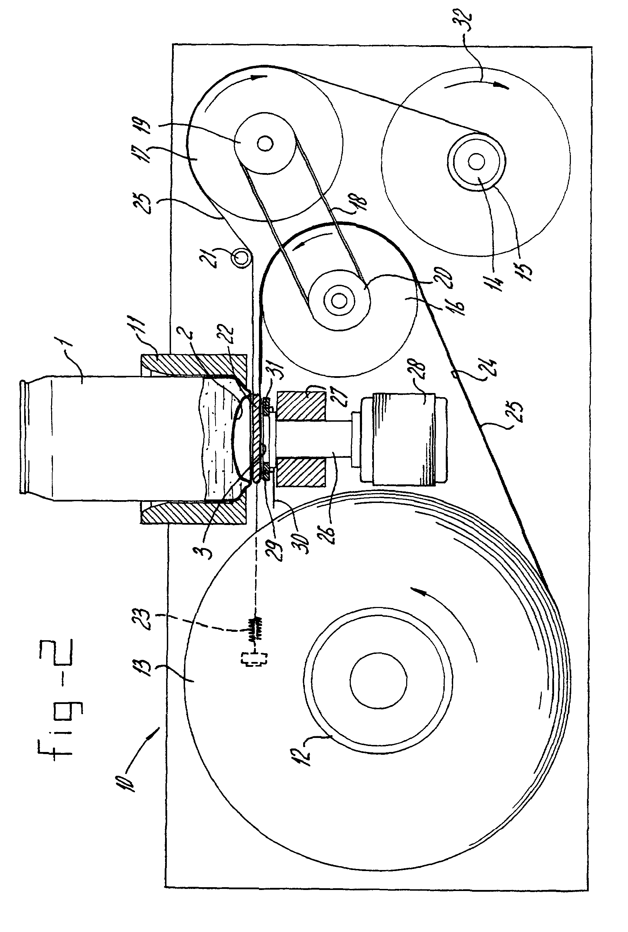

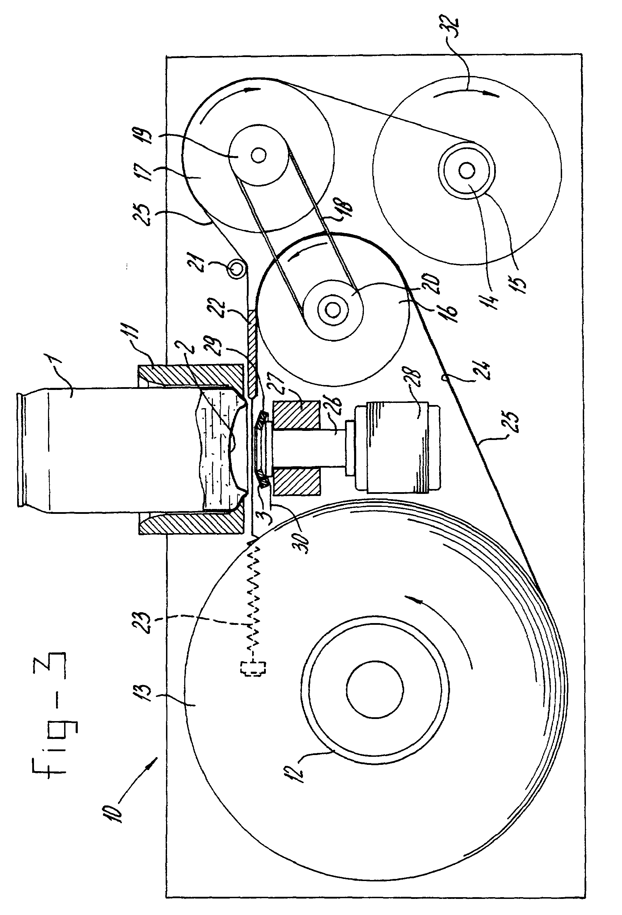

Figs. 2 and 3 show a device for applying such labels 3 to the bottom side of a packaging 1. This device is denoted overall by 10, and only the parts which are essential for an understanding of the present invention are illustrated.

The device 10 comprises a stationary holder 11 for packaging 1 to be positioned in. The above-described labels 3 are arranged on a reel 13 which is placed on a supply stock 12. Apart from these labels 3, which are designed as stickers, reel 13 also comprises a substrate material 25. Auxiliary roller 16 is connected to motor means for blocking and releasing its rotation.

There is a stock of substrate material 25, and this substrate stock is denoted by 14. As the process proceeds, a reel 15 comprising substrate material and, if appropriate, the material surrounding the labels 3 and the core (opening 6) thereof is formed thereon. The web of substrate material/stickers moves from reel 13, via first auxiliary roller 16, to slide 22 and then, after the stickers have been removed, substrate material 25 is diverted via guide roller 21 and auxiliary roller 17 to substrate stock 14. Auxiliary rollers 16 and 17 are connected by a band or belt transmission 18 which runs around a fixed pulley 19 of auxiliary roller 17 and a pulley 20, which is provided with a coupling, on first auxiliary roller 16.

Slide 22 is connected to a spring 23 which is diagrammatically depicted and drives it into the position shown in Fig. 2.

Substrate stock 14 is provided with a motor which is not shown in more detail and can provide, on the one hand, rotation in the direction of arrow 32 and, on the other hand, blocking of this substrate stock 14.

In addition, there is a stamper 26 which can be displaced up and down by means of a coil 28 in guide 27. The stamper surface 29 consists of a material which yields slightly and can move between two positions which are shown in Figs. 2 and 3, the position shown in Fig. 2 being the position adopted in the load-free state. Stamper surface 29 is provided with vacuum orifices 31 which are connected to vacuum hose 30, which in turn is coupled to a vacuum source (not shown in more detail).

Starting from the situation shown in Fig. 2, the device described above functions as follows:

A packing 1 is placed in holder 11. As a result, the device is activated in a manner not shown in more detail, with the aid of sensors which are not shown in more detail.

The first step is the application of a vacuum by vacuum hose 30 through vacuum openings 31, controlled by vacuum source and valves which are not shown in more detail.

As a result, the label 3 is sucked onto stamper surface 29. Then, the auxiliary roller 16 is blocked in a manner not shown in more detail and the substrate material 25 is wound onto substrate stock 14 as a result of the motor rotating the reel bearing substrate material 15 in the direction of arrow 32. This motor drive is not shown in more detail. The pulley with coupling 20 allows this movement to proceed without obstacle, while the belt transmission 18 cannot exert any transmissive force on auxiliary roller 16.

Consequently, slide 22 is moved to the right (as seen in Fig. 2) counter to the force of spring 23, and the position as shown in Fig. 3 is reached. The motor drive of the reel bearing substrate material 15 is then stopped, and auxiliary roller 17 is blocked in a manner not shown in more detail. The label 3 has peeled off substrate material 25 and is resting on stamper surface 29, held in place by the vacuum.

The stamper 26 then moves upwards in guide 27 as a result of coil 28 being energized in a manner not shown in more detail, while stamper surface 29 is deformed, in a manner not shown in more detail, into a conical shape matching the concave base wall 2 of packaging 1.

Held in place on stamper surface 29 by the vacuum openings 31, the label 3 with the layer of adhesive will reach and stick to the concave base wall 2 of packaging 1, in a conical stamper. The vacuum is eliminated by means of valves (not shown in more detail) and stamper 26 is directed downwards by means which are not shown in more detail. In the meantime, stamper surface 29 returns to the position as shown in Fig. 2.

The auxiliary rollers 16 and 17 are both unblocked, while auxiliary roller 16 is rotated by the motor in the direction of the arrow shown in Fig. 2, this motor drive not being shown in more detail. Auxiliary roller 17 is also rotated in the same direction by the pulley with coupling 18 on auxiliary roller 17 and the belt transmission 18. This means that it is rotated in the opposite direction to the arrow shown on auxiliary roller 17. Consequently, slide 22 moves to the left (as seen on the drawing) under the force of spring 23, meanwhile holding the substrate material taut. The substrate material is fed from reel 13 to the underside of slide 22, and a new label 3 has been positioned above the stamper surface 29.

It will be understood that terms such as "above", "below", "left", "right" are purely illustrated.

The device described above is particularly simple to produce, only needing a motor for substrate stock 14 and possibly a motor for auxiliary roller 16, which may optionally be combined with the actuation arrangement for stamper 26. A device of this nature may be of particularly compact design, so that the person who is transferring cans, for example, from an outer packaging into a dispensing machine or is selling these cans in some other way can easily provide them with a coding.

Although the device described above is currently preferred, it should be understood that numerous other device with which labels can be applied to the bottom side of a packaging with a concave base wall can be produced. Variations on the device described above lie within the scope of the appended claims.

## Claims

1. Coding for a packaging (1) with a concave bottom side (2), comprising an annular label (3) provided with an internal opening (6) and a cutout (5) which extends from the said opening across the entire width of the said label (3).

2. Coding according to Claim 1, in which the coding comprises a bar code (4).

3. Coding according to Claim 2, in which the said bar code comprises a number of concentrically extending circles.

4. Coding according to one of the preceding claims, in which the said label (3) comprises a sticker.

5. Coding according to Claim 4, in which the said sticker is arranged removably on a substrate (25) containing various such stickers.

6. Coding according to one of the preceding claims, in which the said packaging comprises a can packaging.

7. Method for applying a coding to a packaging, comprising the steps of removing the said packaging from an outer packaging, applying a coding according to one of Claims 1-5 to its base and processing the said packaging further.

8. Method according to Claim 7, in which the coding comprises a sticker arranged on a substrate (25), the sticker being removed from the substrate, deformed so as to substantially correspond to the concave shape of the bottom side of the packing and being pressed onto the said packaging.

9. Device (10) for applying a coding to the concave bottom side (5) of a packaging (1), comprising a stamper (26) which is designed to displace the said coding from the flat position to a position which corresponds to the shape of the said concave bottom side.

10. Device according to Claim 9, in which the said stamper is arranged in a plane which is perpendicular to the feed of the said coding and is designed to the press the said coding onto the said packaging.

11. Device according to Claim 9 or 10, comprising a supply opening (12) for codings and displacement means (22) for displacing the said codings from the said supply stock to the stamper.

12. Packaging provided with a coding according to one of Claims 1-6.

## Patentansprüche

1. Kodierung für eine Verpackung (1) mit einer konkaven Unterseite (2), die ein ringförmiges Etikett (3) aufweist, welches mit einer inneren Öffnung (6) und einem Ausschnitt (5) versehen ist, welcher sich von der genannten Öffnung über die gesamte Breite des Etiketts (3) erstreckt.

2. Kodierung nach Anspruch 1, wobei die Kodierung einen Barkode (4) aufweist.

3. Kodierung nach Anspruch 2, wobei der Barkode eine Anzahl sich konzentrisch erstreckender Kreise aufweist.

4. Kodierung nach einem der vorhergehenden Ansprüche, wobei das Etikett (3) einen Aufkleber aufweist.

5. Kodierung nach Anspruch 4, wobei der Aufkleber abnehmbar auf einem Substrat (25) angeordnet ist, das mehrere derartige Aufkleber enthält.

6. Kodierung nach einem der vorhergehenden Ansprüche, wobei die Verpackung eine Dosenverpackung aufweist.

7. Verfahren zum Aufbringen einer Kodierung auf einer Verpackung, das die folgenden Schritte aufweist: Entfernen der Verpackung aus einer Umverpackung, Aufbringen einer Kodierung entsprechend einem der Ansprüche 1 - 5 auf deren Boden und Weiterverarbeitung der genannten Verpackung.

8. Verfahren nach Anspruch 7, wobei die Kodierung einen auf einem Substrat (25) angeordneten Aufkleber aufweist, wobei der Aufkleber von dem Substrat entfernt wird, verformt wird, um im wesentlichen der konkaven Form der Unterseite der Verpackung zu entsprechen, und auf die Verpakkung gedrückt wird.

9. Vorrichtung (10) zum Aufbringen einer Kodierung auf die konkave Unterseite (5) einer Verpackung (1), die einen Stempel (26) aufweist, der so konstruiert ist, daß er die Kodierung von der flachen Position in eine Position verschiebt, die der Form der konkaven Unterseite entspricht.

10. Vorrichtung nach Anspruch 9, wobei der Stempel in einer Ebene angeordnet ist, die senkrecht zum Vorschub der Kodierung ist und der so konstruiert ist, daß er die Kodierung auf die Verpackung drückt.

11. vorrichtung nach Anspruch 9 oder 10, die eine Zuführungsöffnung (12) für Kodierungen und eine Verschiebungseinrichtung (22) zum Verschieben der Kodierungen aus dem Zuführungsvorrat auf den Stempel aufweist.

12. Verpackung, die mit einer Kodierung nach einem der Ansprüche 1 - 6 versehen ist.

## Revendications

1. Codification pour conditionnement (1) avec une partie inférieure concave (2), comprenant une étiquette annulaire (3) pourvue d'une ouverture interne (6) et d'une découpe (5) qui s'étend de ladite ouverture à travers la largeur entière de ladite étiquette (3).

2. Codification selon la revendication 1, dans laquelle ladite codification comprend un code barres (4).

3. Codification selon la revendication 2, dans laquelle ledit code barres comprend un nombre de cercles s'étendant de manière concentrique.

4. Codification selon l'une des revendications précédentes, dans laquelle ladite étiquette (3) comprend un autocollant.

5. Codification selon la revendication 4, dans laquelle ledit autocollant est agencé de manière à pouvoir être décollé sur un support (25) contenant divers autocollants de ce type.

6. Codification selon l'une des revendications précédentes, dans laquelle ledit conditionnement comprend un conditionnement de boîte de conserve.

7. Procédé pour appliquer une codification sur un conditionnement, comprenant les étapes consistant à retirer ledit conditionnement d'un conditionnement externe, appliquer une codification selon l'une des revendications 1 à 5 sur sa base et conditionner ledit conditionnement davantage.

8. Procédé selon la revendication 7, dans lequel la codification comprend un autocollant agencé sur un support (25), l'autocollant étant ôté du support, déformé afin de correspondre sensiblement à la forme concave de la partie inférieure de l'emballage et étant comprimé sur ledit conditionnement.

9. Dispositif (10) pour appliquer une codification sur la partie inférieure concave (5) d'un conditionnement (1), comprenant une vignetteuse (26) qui est conçue pour déplacer ladite codification de la position plate jusqu'à une position qui correspond à la forme de ladite partie inférieure concave.

10. Dispositif selon la revendication 9, dans lequel ladite vignetteuse est agencée dans un plan qui est perpendiculaire à l'avance de ladite codification et qui est conçu pour comprimer ladite codification sur ledit conditionnement.

11. Dispositif selon la revendication 9 ou 10, comprenant une ouverture d'alimentation (12) pour les codifications et des moyens de déplacement (22) pour déplacer lesdites codifications depuis ledit stock d'alimentation vers la vignetteuse.

12. Conditionnement pourvu d'une codification selon l'une des revendications 1 à 6.
